# EUROPEAN PATENT APPLICATION

(11) **EP 1 108 520 A1**
(43) Date of publication of application: **20.06.2001**
(21) Application number: 00912915.6
(22) Date of filing: 29.03.2000
(51) Int. Cl.: B29C 45/56, B29C 45/28, B29C 45/77

(54) **INJECTION COMPRESSION MOLDING METHOD AND INJECTION COMPRESSION MOLDING DEVICE FOR EMBODYING THIS METHOD**

(30) Priority: 01.04.1999 JP 9444899; 01.11.1999 JP 31064299; 01.11.1999 JP 31064399; 25.01.2000 JP 2000015806
(71) Applicant: Mitsui Chemicals, Inc., Tokyo 100-6070 (JP)
(72) Inventor: MIYAMOTO, Akira, Room No.1-308, Mitsui Kagaku Ryo, Nagoya-shi, Aichi 457-0819 (JP); YAMAKI, Masahiko, Nagoya-shi, Aichi 457-0008 (JP); KUWAHATA, Kenji, Room No.1-306, Mitsui Kagaku Ryo, Nagoya-shi, Aichi 457-081 (JP); ZENKO, Hirofumi, Nagoya-shi, Aichi 457-0819 (JP); MORITA, Katsuyuki, Nagoya-shi, Aichi 457-0819 (JP); OGASAWARA, Hideto, Room No.b-34,, Nagoya-shi, Aichi 458-0845 (JP)
(74) Representative: Strehl Schübel-Hopf & Partner
(86) International application number: JP0001952
(87) International publication number: WO0059705

(57) **Abstract**

With an object of providing a method for injection compression molding and an apparatus for working the method which can speedily and efficiently carry out multi-cavity molding of high-precision molded products, the method according to the present invention is characterized by carrying out in order a process comprising the steps of providing a mold comprising a movable mold and a stationary mold, and being provided with a plurality of cavities each being provided with a movable core and a hot runner through which a distributed flow of molten resin is supplied to the cavities; closing the mold (2, 3); then supplying the molten resin to fill a plurality of the cavities (1A, 1B) provided in the mold while making the molten resin distributed to flow through the hot runners (10A, 10B) provided for respective cavities; individually detecting a resin-filled state in each cavity; when the resin-filled state in the cavity is detected to become in a specified state, individually closing a gate of the cavity completely; individually advancing a top of the movable core (5A, 5B) into the cavity to individually raise a pressure in the cavity up to a specified value; and ejecting molded products after a specified cooling time.

## Description

### BACKGROUND OF THE INVENTION

### 1. Field of the Invention

The present invention relates to a method for injection compression molding and an apparatus for working the method, more particularly to a method for a so-called multi-cavity injection compression molding and an apparatus for working the method.

### 2. Description of the Related Art

In injection molding as one of plastics molding methods, hot plastic resin, molten, mixed and milled in a molding machine, is poured in a molding space (cavity) in a mold for being cooled and hardened in the mold to be provided as plastics in a specified form.

In the injection molding, multi-cavity molding is a common practice for obtaining high productivity, in which resin is injected into a plurality of cavities at one time to be produced as a plurality of molded products. About a process of filling each of the cavities with resin in such multi-cavity molding, observation with short molded products or a visualized mold proves that there is a variation in a filling time of each of cavities such that the resin fills the cavities unevenly.

The resin filling the cavities shrinks when cooled by the mold. Therefore, further resin is supplied into the cavity by the molding machine with application of a holding pressure so as to compensate the shrinkage. In the multi-cavity molding, variation among amounts of the resin filling the cavities causes pressure differences among the cavities that provide different shrinkage factors which results in difference in dimensional accuracy among the molded products.

While, injection and compression molding is adopted in producing optical discs such as CD-Rs, DVDs, DVD-Rs for which high dimensional accuracy is required, or high precision plastic mechanical parts such as precision gears above the second grade of JIS (Japanese Industrial Standards), compressor valves or impellers. The molding method therefor is basically the same as conventional injection molding. However, with additional compression operation to the mold, it provides better molded products with reduced distortion together with improved replication characteristics and optical characteristics.

There are two types of applying compression to a mold, i.e. a whole parting area compression type and a core compression type. In the whole parting area type, a mold with socket and spigot structure is used in which movable mold is controlled by mold clamping pressure for applying the compression. In the core compression type, an independent pressurizing unit is provided on the movable mold for pressurizing the cavity by a movable component part provided in the mold.

The present invention can be preferably applied to the latter method.

In conventional injection compression molding, every cavity is still compressed at a time even in carrying out multi-cavity molding to make it impossible to eliminate variation among in molded products due to the resin unevenly filling the cavities, which was liable to cause variation in accuracy of the molded products. Therefore, single-cavity molding is still dominant even at present for the high precision molded products as above even by the injection compression molding, while molding with two or more cavities inevitably lowers dimensional accuracy with an increase in the number of cavities.

A specific example of a mold for the injection compression molding aiming at the multi-cavity molding is shown as the one described in JP-A-61-125824, for example.

The mold in the above example is, in addition to pressurizing cylinders for driving a plurality of movable inserts together which are provided in a plurality of cavities, respectively, provided with supplementary fine adjustment pressurizing cylinders for individually driving the respective movable inserts. Each of the movable inserts is thus finely adjusted while being driven to eliminate differences among conditions of the filled cavities. Namely, a pressure in each of the cavities is detected by a pressure sensor provided in each of resin wells so as to control pressurizing force of each of the fine adjustment pressurizing cylinders on the basis of detected values.

However, in such a plurality of the cavities, communicating with one another through a gate each other, variation in conditions of the cavities due to unevenly supplied resin is not so completely eliminated even by the independent pressurization that variation is still found in accuracy'of the molded products. Furthermore, there is come time-lag in behavior in resin pressure between the cavity and the resin well provided outside the cavity for resin pressure detection. This causes a problem of making it difficult to speedily and accurately pressurize the resin.

Another specific example of an apparatus for the injection compression molding aiming at the multi-cavity molding is shown as the one described in JP-A-61-211012.

The apparatus has, in addition to the independent fine adjustment control mechanism of the movable insert in the mold described in the above JP-A-61-125824, pressure detecting pins and double-doored regulating valves. Each of the pins and each of the regulating valves are attached to each of runner sections so as to adjust supply of the molten resin on the basis of the pressure of each of the resin well.

This makes the control mechanism more complicated than that for the mold described in the above JP-A-61-125824. The complicated mechanism will cause a time lag between detected pressure behavior and actual pressure behavior in the cavity or a delay in resin injection operation due to limited response speed in control operation of the regulating valve of the runner section. Thus there is presented a problem of making speedy and accurate operation difficult.

An apparatus for solving the above problems is shown as the invention described in JP-A-6-208734. The invention proposes to carry out individually in each of cavities operations of detecting an internal pressure of a mold, sealing a sprue when the detected pressure reaches a specified value, and compressing the cavity after a specified time elapsed. In the invention, the resin pressure is detected by a pressure sensor provided at a rear end of an ejector sleeve. The ejector sleeve and a gate cutter mechanism in contact with inside the ejector sleeve are both allowed to slide. Therefore, long-term molding will cause wear that behaviors friction resistance with time to sometimes result in variation in detected value of pressure.

Moreover, a multi-cavity mold with individually controlled compression cores is shown as the invention related to JP-A-6-304981. In the invention, compression cores for plurality of cavities and cut punches for cutting gates are individually controlled. In the method, however, the compression cores and cut punches are controlled with reference to elapsed time rather than detection of the state of the resin in the cavity. This requires many man-hours in determining the optimum condition of each of the cavities.

Furthermore, in producing molded products requiring superior optical characteristics such as CD-Rs, DVDs, DVD-Rs, resin flow made merged in a runner section just before a gate causes a problem of deteriorating optical characteristics of the molded products.

### SUMMARY OF THE INVENTION

The present invention was made to solve the above problems with an object of providing a method for injection compression molding and an apparatus for working the method by which drawbacks in conventional injection compression molding are eliminated, multi-cavity molding of high precision molded products can be carried out speedily and efficiently, molded products requiring superior optical characteristics can be molded without loss of the optical characteristics thereof, and the apparatus can be constituted without requiring any complexity.

The above object can be achieved by the parting area compression type mold to which the present invention is suitably applied, namely, by a method for injection compression molding of carrying out in order a process comprising the steps of:
providing a mold comprising a movable mold and a stationary mold, and being provided with a plurality of cavities each being provided with a movable core and a hot runner through which a distributed flow of molten resin is supplied to the cavities;
closing the mold;
then supplying the molten resin to fill a plurality of the cavities provided in the mold while making the molten resin distributed to flow through the hot runners provided for respective cavities;
individually detecting a resin-filled state in each cavity;
when the resin-filled state in the cavity is detected to become in a specified state, individually closing a gate of the cavity completely;
individually advancing a top end of the movable core into the cavity to individually raise a pressure in the cavity up to a specified value; and
ejecting molded products after a specified cooling time.

The resin-filled state in each cavity can be detected by individually detecting a pressure in each cavity or by individually detecting a position of the movable cores in each cavity.

It is recommended that supplying of the resin is started to fill the cavity therewith with a specified pressure applied to each of the movable cores beforehand to advance the movable cores to a parting line side and, when each of the movable cores, being gradually retreated against the above pressure as the cavity is being filled with the resin, comes at a specified position, the gate is completely closed.

It is also recommended that a volume of resin more than a specified volum is supplied to fill the cavity, the movable core is thereafter pressed into the cavity to allow a part of the resin to flow back through the gate, and the gate is completely closed when a top end of the movable core comes at the specified position in the process.

In the hot runner of a valve gate type, the gate is opened and closed by the valve thereof, while in the hot runner not of a valve gate type, it is recommended that the gate is opened and closed by a punch advancing and retreating in the cavity toward and from the gate.

The method for injection compression molding according to the present invention can be suitably carried out by an apparatus for injection compression molding comprising:
a mold comprising a movable mold and a stationary mold, the movable mold and the stationary mold being constituted so as to form a plurality of cavities when the mold is closed;
a plurality of flow distributing passages distributing molten resin injected from an injection nozzle;
a plurality of hot runners each provided in the stationary mold for each of the cavities with each of the flow distributing passages connected thereto so that the distributed molten resin is simultaneously supplied to fill a plurality of the cavities;
a plurality of movable cores each provided for each of the cavities in the movable mold so as to raise pressure of the molten resin filled in the cavity with a top end of the movable core made to advance into the cavity;
a plurality of sensors each individually detecting a resin-filled state in each of the cavities; and
a controlling unit controlling operations of opening and closing the mold, supplying the molten resin from the
injection nozzle, opening and closing a plurality of the gates, and advancing and retreating the movable cores,
the controlling unit carrying out in order controls of closing the mold, individually detecting the resin-filled state in each of the cavities by each of the sensors with the molten resin being supplied from each of the hot runners to fill each of the cavities, individually closing the gate of a cavity in which the resin-filled state in the cavity becomes in a specified state, individually advancing thereafter each of the movable cores into the cavity in the specified resin-filled state to individually raise a pressure in each cavity up to a specified value, and ejecting molded products after a specified cooling time.

In the above apparatus, for the sensor detecting the resin-filled state in each of the cavities, a pressure sensor can be used which detects a pressure in each of the cavities, or a position sensor can be used which detects a position of the movable core in each of the cavities, for example.

For the hot runner, a hot runner of a valve gate type can be suitably used.

In particular, in molding molded products for which a superior optical characteristics are required, it is recommended to use a valve gate type hot runner in which a gate opening and closing section is positioned apart from the cavity. Such hot runner is constituted so that molten resin with a volum equal to or more than one shot is reserved between the gate opening and closing section and the cavity.

In using a hot runner not of a valve gate type, it is recommended that the gate is provided with a punch advancing and retreating in the cavity toward and from the gate for being opened and closed.

### BRIEF DESCRIPTION OF THE DRAWINGS

FIG. 1 is a schematic cross sectional view showing an embodiment of an apparatus for injection compression molding according to the present invention used for carrying out a method for injection compression molding according to the present invention with the apparatus being in the first stage of filling cavities with molten resin;
FIG. 2 is a schematic cross sectional view showing the apparatus shown in FIG. 1 being in the second stage of filling cavities with molten resin;
FIG. 3 is a schematic cross sectional view showing the apparatus shown in FIG. 1 being in the third stage of filling cavities with molten resin;
FIG. 4 is a cross sectional view showing a first example of a valve gate type hot runner used in the apparatus according to the present invention;
FIG. 5 is a cross sectional view showing a second example of a valve gate type hot runner used in the apparatus according to the present invention;
FIG. 6 is an example of a timing chart showing timing of injection compression molding carried out according to the stages in the embodiment shown in FIGS. 1 to 3;
FIG. 7 is a block diagram showing an example of a configuration of a controlling unit provided in the apparatus for injection compression molding according to the present invention;
FIG. 8 is a schematic cross sectional view showing another embodiment of an apparatus for injection compression molding according to the present invention used for carrying out a method for injection compression molding according to the present invention with the apparatus being in the first stage of filling cavities with molten resin;
FIG. 9 is a schematic cross sectional view showing the apparatus shown in FIG. 8 being in the second stage of filling cavities with molten resin;
FIG. 10 is a schematic cross sectional view showing the apparatus shown in FIG. 8 being in the third stage of filling cavities with molten resin;
FIG. 11 is an example of a timing chart showing timing of injection compression molding carried out according to the stages in the embodiment shown in FIGS. 8 to 10;
FIGS. 12A to 12D are partial cross sectional views illustrating successive steps of an example of a process of filling arbitrary one of a plurality of cavities with molten resin in embodiment of an apparatus for injection compression molding according to the present invention in which the molten-resin-filled state of the cavity is determined by detecting the position of the movable core;
FIG. 13 is an example of a timing chart showing timing of injection compression molding carried out according to the steps in the embodiment shown in FIGS. 12A to 12D;
FIGS. 14A to 14E are partial cross sectional views illustrating successive steps of a more preferable process as another example of the process of filling one of a plurality of cavities with molten resin in the embodiment of the apparatus shown in FIGS. 12A to 12D;
FIG. 15 is an example of a timing chart showing timing of injection compression molding carried out according to the steps in the embodiment shown in FIGS. 14A to 14E;
FIG. 16 is a graph showing behavior in pressure in each of cavities in the apparatus according to the present invention; and
FIG. 17 is a graph showing behavior in pressure in each of cavities in the apparatus of the related art.

### DESCRIPTION OF THE PREFERRED EMBODIMENTS

The present invention will be specifically explained below with reference to drawings.

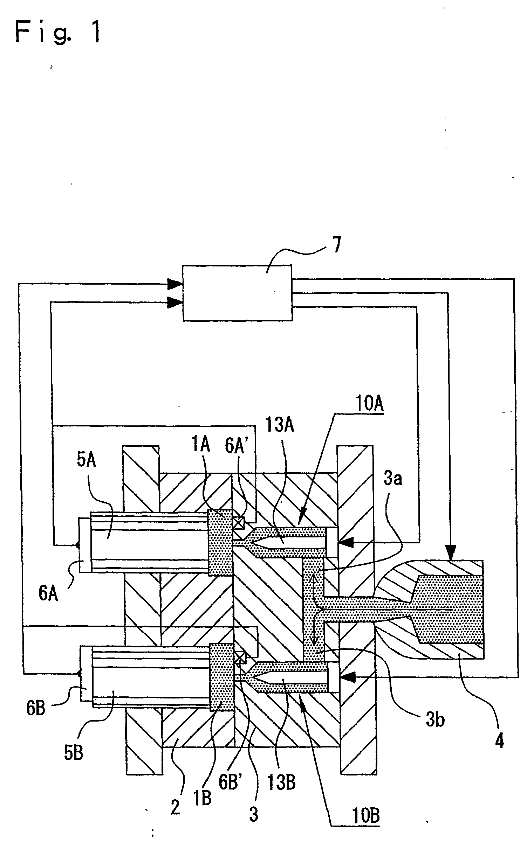

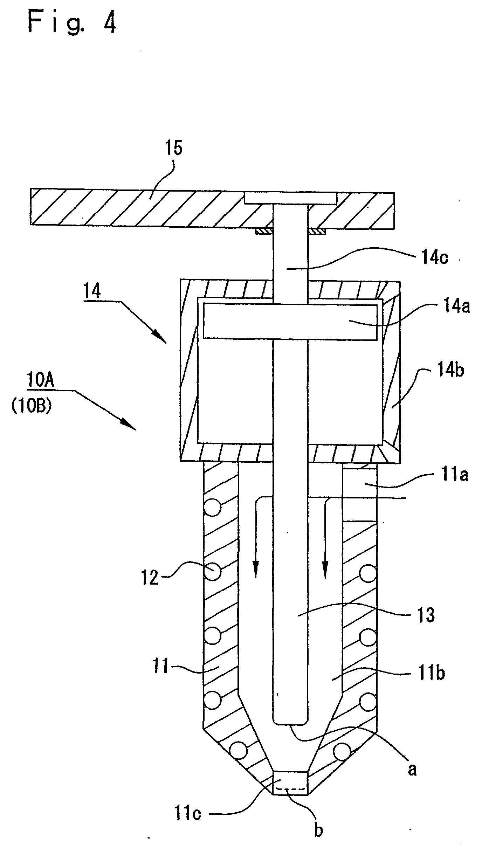

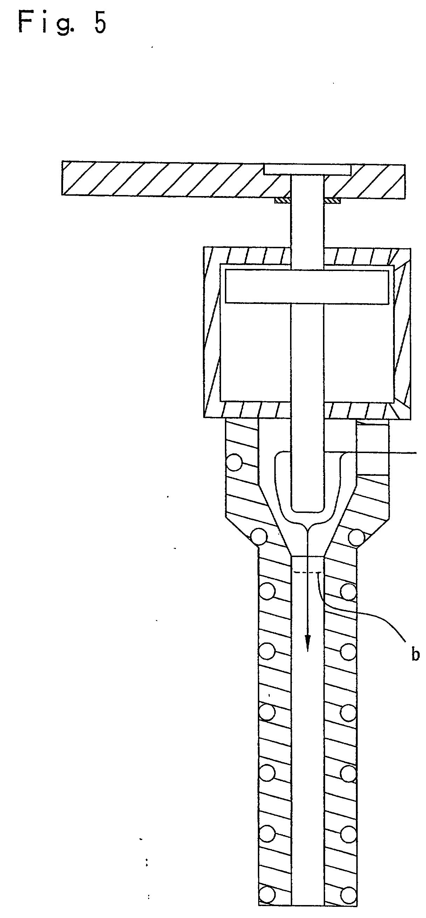

FIGURE 1 to FIGURE 3 are cross sectional views showing an embodiment of an apparatus for working a method for injection compression molding according to the present invention. The apparatus is provided with cavities 1A and 1B filled with molten resin, a movable mold 2, a stationary mold 3, an injection nozzle 4 injecting the molten resin into a mold, movable cores 5A and 5B provided for the cavities 1A and 1B, respectively, pressure sensors 6A and 6B provided at rear ends of the movable cores 5A and 5B for detecting resin pressure in the cavities 1A and 1B,respectively, a controlling unit 7 by which entire operations of the apparatus are controlled, and valve gate type hot runners 10A and 10B (two of specific examples of them are shown in FIG. 4 and FIG. 5) provided for the cavities 1A and 1B, respectively.

The apparatus for injection compression molding shown in FIG. 1 to FIG. 3 is characterized in that:
(1) the movable cores 5A and 5B, each of which can be independently controlled, are provided in the movable mold 2 for independently pressurizing the molten resin filling the cavities 1A and 1B;
(2) the pressure sensors 6A and 6B, which can detect pressures in the cavities 1A and 1B, are provided at the rear ends of the movable cores 5A and 5B, respectively, for individually detecting a resin-filled state of the molten resin in each of the cavities 1A and 1B;
(3) the valve gate type hot runners 10A and 10B are used as runners for injecting the molten resin into respective cavities, which hot runners are provided with heating means, each can control temperature of the resin flowing in each runner so that distributed flow of the resin is not hardened, and needle valves 13A and 13B that can completely close gates thereof, respectively; and
(4) the controlling unit 7 is provided, which automatically carries out a sequence of operations of individually detecting pressure in each of the cavities 1A and 1B by each of the pressure sensors 6A and 6B, individually closing the gate of the valve gate type hot runner 10A or 10B of the cavity by the needle valve to check the flow of the molten resin when the pressure in the cavity reaches a specified one, and individually pressing the movable core 5A or 5B to uniformly apply pressure to the resin in the cavity.

The valve gate type hot runner used in the present invention refers to a runner whose nozzle itself is provided with a heater for preventing the molten resin from temperature decrese, together with a needle valve that can open and close the nozzle gate. A first example of the hot runner will be explained with reference to FIG 4.

The valve gate type hot runner 10A (10B) shown in the figure comprises a hot nozzle 11, a heater 12, a needle valve 13, an actuator 14, and limit bar 15, with the actuator 14 comprising a piston 14a, a cylinder chamber 14b and a piston rod 14c.

The molten resin is charged from an inlet 11a of the hot nozzle 11, flows through a bore 11b and is injected from a gate 11c at the top into the cavity to fill it.

During the filling period with the resin, the tip of the needle valve 13 is halted at a position "a" in the nozzle 11 to make the gate 11c in an opened state that allows the molten resin to easily flow into the cavity as shown in Fig. 4.

After the molten resin has filled the cavity in this way to make the cavity satisfy a specified filled state, the actuator 14 is actuated to advance the tip of the needle valve 13 to a position "b" near the top end of the hot nozzle 11. This allows the gate 11c to be completely closed.

In the example shown in the figure, the limit bar 15 provided at the upper end of the piston rod 14c is made stopped by a stopper omitted from the figure during the period of closing the mold so that the tip of the needle valve 13 is not advanced (lowered) over the position "b".

In FIG 5, there is shown a second example of the valve gate type hot runner. In the example, a gate opening and closing section is not positioned near the cavity so that the molten resin with a volume of at least one shot can be reserved between the gate opening and closing section and the cavity while being kept in heated and molten state.

In the valve gate type hot runner with such form, the gate opening and closing section is positioned apart from the cavity. This allows the molten resin with a volume equal to or more than one shot, which are reserved in the bore 11b, to be injected into the cavity to fill it without being affected by merging of the molten resin flow at the tip of the needle valve 13. Therefore, molded products requiring superior optical characteristics can be produced without optical characteristics thereof being deteriorated.

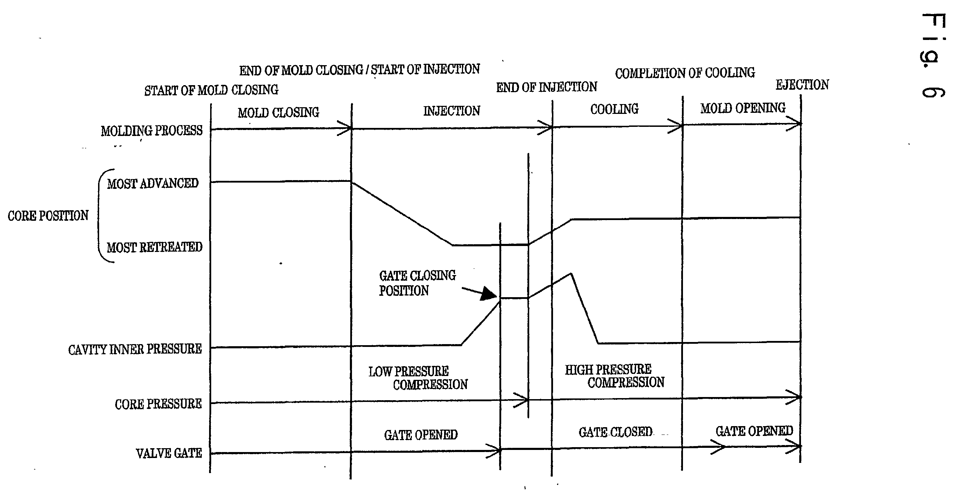

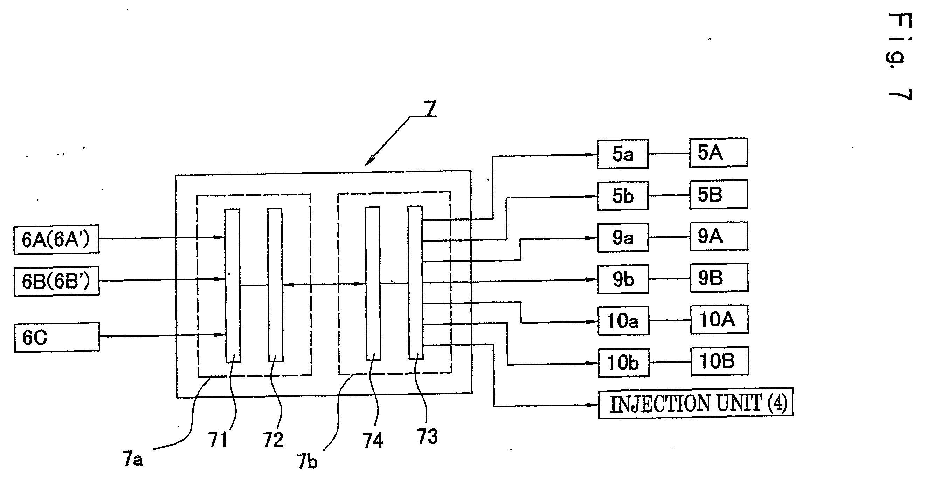

FIGURE 6 is an example of a timing chart showing relationships between time and the states of the molding process, core position, cavity inner pressure, core pressure, and valve gate in carrying out the method for injection compression molding according to the present invention using the apparatus for injection compression molding shown in FIGS. 1 to 3. FIGURE 7 is a block diagram showing an example of the controlling unit 7.

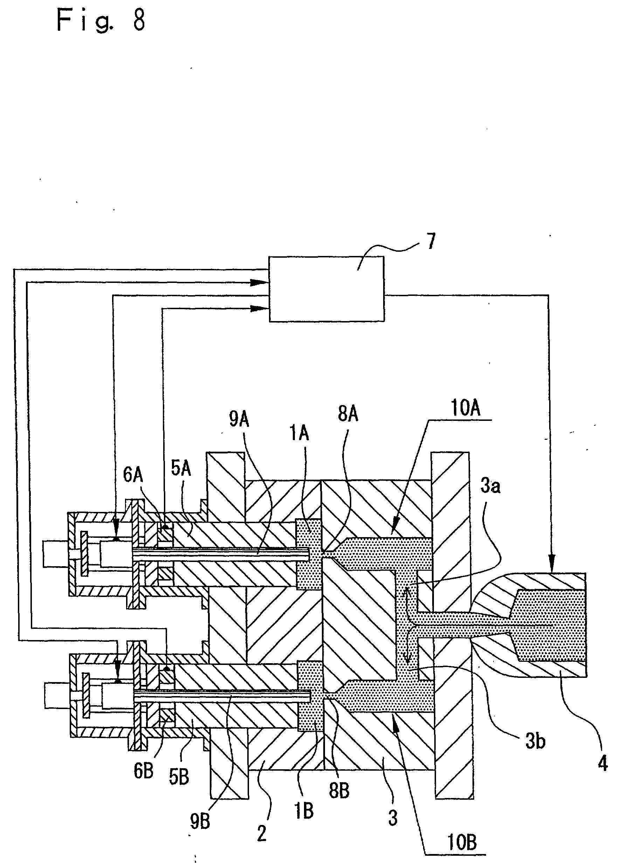

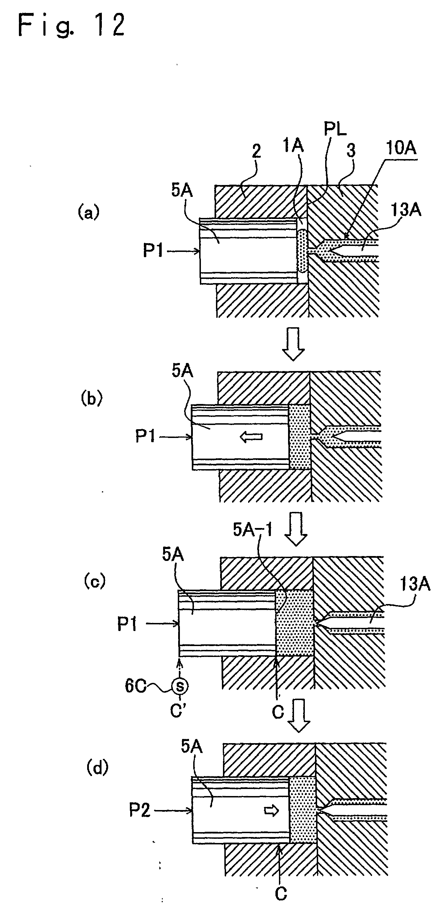

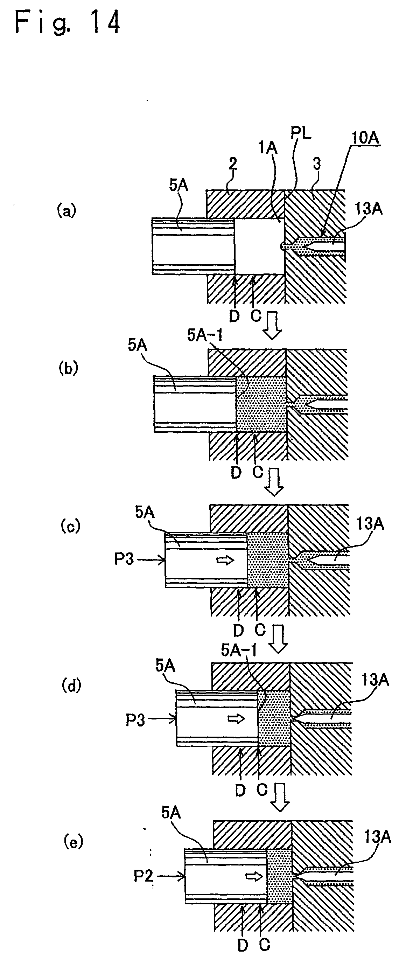

In FIG. 7, the controlling unit 7 comprises an input signal processor 7a with a process card 71 and I/O card 72, and an controlling output signal sending processor 7b with a process card 73 and I/O card 74. To the input signal processor 7a, there are given outputs of the pressure sensors 6A and 6B, and those of pressure sensors 6A' and 6B' provided at other positions as will be described later, or an output of a position detection sensor 6C used in still another embodiment shown in FIGS. 12A to 12D or FIGS. 14A to 14E. The outputs of the controlling output signal sending processor 7a are sent to servo valves 5a and 5b of cylinders for respectively driving the movable cores 5A and 5B, to servo valves 10a and 10b of valve gate cylinders for respectively driving needle valves 13A and 13B of the valve gate type hot runners 10A and 10B, and to servo valves 9a and 9b of punch cylinders for driving punches 9A and 9B in another embodiment shown in FIGS. 8 to 10.

In carrying out injection compression molding with the apparatus shown in FIGS. 1 to 3, the resin being molten and plasticized at an injection molding machine is distributed from the injection nozzle 4 to the valve gate type hot runners 10A and 10B through respective flow distribution passages 3a and 3b formed in the stationary mold 3 for filling cavities 1A and 1B through respective gates at top ends of the runners (see FIG. 1).

At this time, supply of the filling resin is started with the movable cores 5A and 5B being advanced onto the parting line side with a specified pressure P1 applied thereto beforehand at a pre-stage of injection. As each of the cavities 1A and 1B is gradually filled with the resin with the inner pressure thereof raised up to the P1 or above, the movable cores 5A and 5B gradually retreat due to the pressure forces.

In order to judge whether or not the cavities 1A and 1B are sufficiently filled with the resin, the pressures inside the cavities 1A and 1B are detected by the pressure sensors 6A and 6B provided at the rear ends of the movable cores 5A and 5B provided for the cavities, respectively, so as to transmit the outputs of the sensors to the controlling unit 7.

Specifically, for example, each of the pressure sensors 6A and 6B is of using a strain gage for detecting the resin pressure in the cavity as a strain of the core, which is calibrated for being detected as a pressure. As for molded products each with an imprint of the pressure sensor safely left thereon, the pressure sensors are preferably provided at positions 6A' and 6B' shown in FIG. 1 because the resin pressures in the cavities can be directly detected there. At this time, a pressure sensor of a piezoelectric element, in which a pressure is detected by calibrating a voltage generated when force is applied to quartz, is more preferable than that of a strain gage because of its smaller mounting space and its higher accuracy.

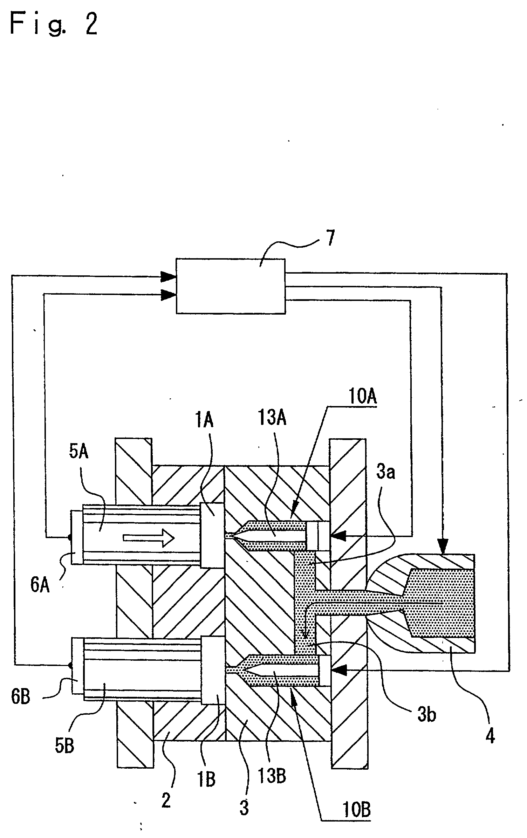

Let the pressure of the cavity 1A first reach a specified one when the cavities 1A and 1B are fully filled to raise the pressure of the resin. This allows the controlling unit 7 to transmit a signal to a driving unit (the servo valve 10a of the valve gate cylinder in FIG. 7) of the valve gate type hot runner 10A for the cavity 1A. The driving unit then shifts the needle valve 13A thereof to the gate side as shown in FIG. 2 for completely closing the gate.

Then, the movable core 5A is made advanced into the cavity 1A to compress the molten resin in the cavity to unify the pressure distribution in the cavity. At the same time, the resin in the cavity 1A is compressed until the pressure thereof reaches the other specified value.

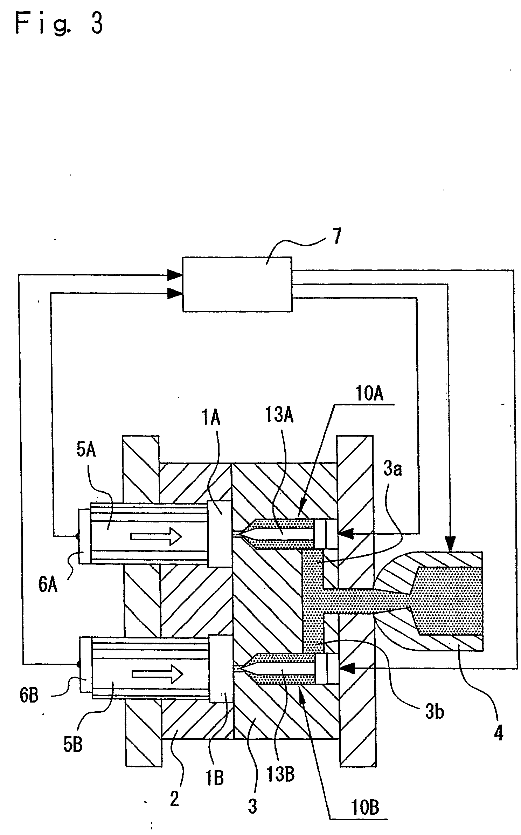

Next to this, when the pressure of the cavity 1B reaches a specified one, the controlling unit 7 transmits a signal to a driving unit (the servo valve 10b of the valve gate cylinder in FIG. 7) of the valve gate type hot runner 10B for the cavity 1B like in the above. The driving unit then shifts the needle valve 13B thereof to the gate side as shown in FIG 3 for completely closing the gate. Along with this, the movable core 5B is made advanced into the cavity 1B to compress the molten resin in the cavity to unify the pressure distribution in the cavity. At the same time, the resin in the cavity 1B is compressed until the pressure thereof reaches the other specified value.

In this case, each of the detected values for controlling the movable cores and valve gate type hot runners, is scanned with a scanning time of 2msec or less, preferably of 1msec or less, and further preferably, of 500µsec or less.

In the present invention, such operations, each being independently carried out for each of the cavities 1A and 1B, can provide the same shape of pressure behavior between the cavity 1A and cavity 1B after being completely filled with the resin.

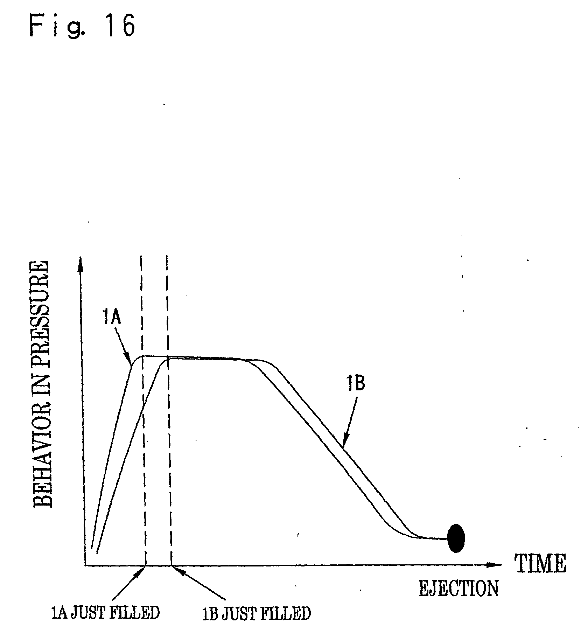

Namely, according to the present invention, as shown in FIG 16, a graph showing behavior in pressure in each of the cavities 1A and 1B, the maximum pressure and the period of holding the pressure in each of the cavities can be made to be the same to the other. With such application of pressure to the resin in a definite period and cooling of the resin by the mold, the resin is hardened to be obtained as high precision molded products without variations in forms and other associated characteristics.

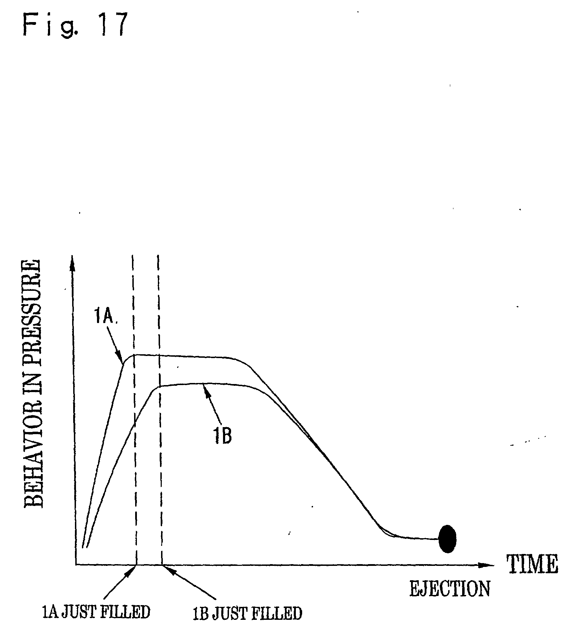

Contrary to this, in the related art, the resin in each of the cavities 1A and 1B is simultaneously compressed with the other to make the pressure in the cavity 1B lowered without reaching the maximum pressure of the cavity 1A as shown in FIG 17. This results in larger shrinkage factor of the molded product after being molded in the cavity 1B than that of the molded product in the cavity 1A to cause variation in dimensions of final products.

The embodiment is shown as two-cavity molding in the drawings. However, the number can be further increased by increasing the number of cavities and, in compliance with this, the number of the valve gate hot runners and movable cores.

According to the present invention, it becomes possible to produce gears of the second grade of JIS or impellers, at present produced by single-cavity molding with core compression molding, by four-cavity molding.

Moreover, as for optical disks such as CD-Rs, DVDs and DVD-Rs, at present produced by single-cavity molding with whole parting area compression molding adopted, two to four-cavities molding also becomes possible by adopting the method for core compression molding according to the present invention.

Next, another embodiment shown in FIGS. 8 to 10 will be explained.

The embodiment differs from that shown in FIGS. 1 to 3 in that, while the hot runner of valve gate type is used for opening and closing the gate in the embodiment shown in FIGS. 1 to 3, the gate of the hot runner in the embodiment shown in FIGS. 8 to 10 is constituted to be opened and closed by a punch which advances and retreats in the cavity toward and from the gate without using the valve gate type hot runner.

In FIGS. 8 to 10, reference numerals and characters 10A and 10B denote hot runners provided for the cavities 1A and 1B for which gates 8A and 8B opened and closed by punches 9A and 9B are provided, respectively. Other elements denoted with the same reference numerals and characters are the same or equivalent elements shown in FIGS. 1 to 3.

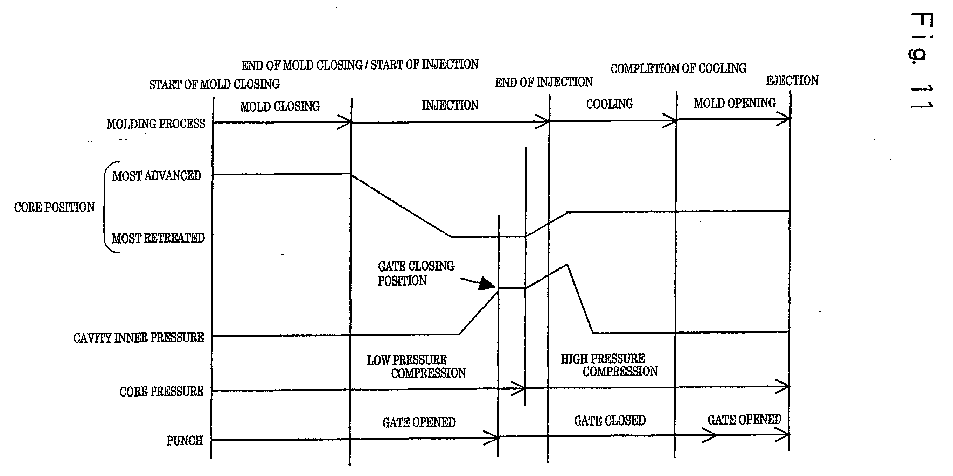

FIGURE 11 is an example of a timing chart showing relationships between time and the states of the molding process, core position, cavity inner pressure, core pressure, and punch in carrying out the method for injection compression molding according to the present invention using the apparatus for injection compression molding shown in FIGS. 8 to 10.

Like in the embodiment explained above, the resin being molten and plasticized at an injection molding machine is first distributed from the injection nozzle 4 to the valve gate type hot runners 10A and 10B through respective flow distribution passages 3a and 3b formed in the stationary mold 3 for filling cavities 1A and 1B through respective gates 8A and 8B at top ends of the runners, respectively (see FIG. 8).

At this time, supply of the filling resin is started with the movable cores 5A and 5B being advanced onto the parting line side with a specified pressure P1 applied thereto beforehand at a pre-stage of injection. As each of the cavities 1A and 1B is gradually filled with the resin with the inner pressure thereof raised up to the P1 or above, the movable cores 5A and 5B to gradually retreat due to the pressure forces.

The pressures inside the cavities 1A and 1B are detected by the pressure sensors 6A and 6B provided at the rear ends of the movable cores 5A and 5B provided for the cavities, respectively, so as to transmit the outputs of the sensors to the controlling unit 7. The pressure sensors of the same kind as that used in the previous embodiment in which the valve gate are used are mounted at the same positions as those in the previous embodiment.

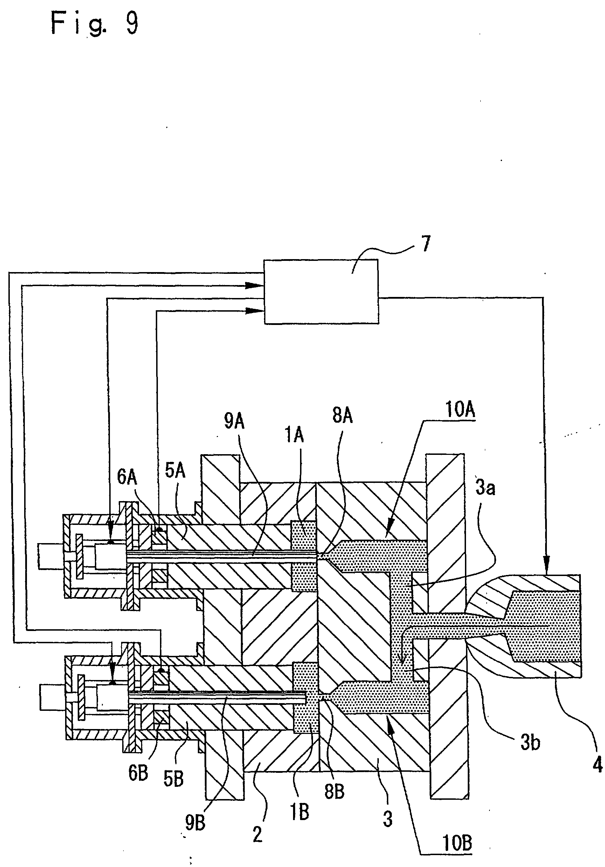

Let the pressure of the cavity 1A first reach a specified one when the cavities 1A and 1B are fully filled to raise the pressure of the resin therein. This allows the controlling unit 7 to transmit a signal to a driving unit (the servo valve 9a of the punch cylinder in FIG 7) of the punch 9A for the cavity 1A. The driving unit then shifts the punch 9A to the side of the gate 8A as shown in FIG. 9 for completely closing the gate 8A.

Then, the movable core 5A is made advanced into the cavity 1A to compress the molten resin in the cavity to unify the pressure distribution in the cavity. At the same time, the resin in the cavity 1A is compressed until the pressure thereof reaches the other specified value.

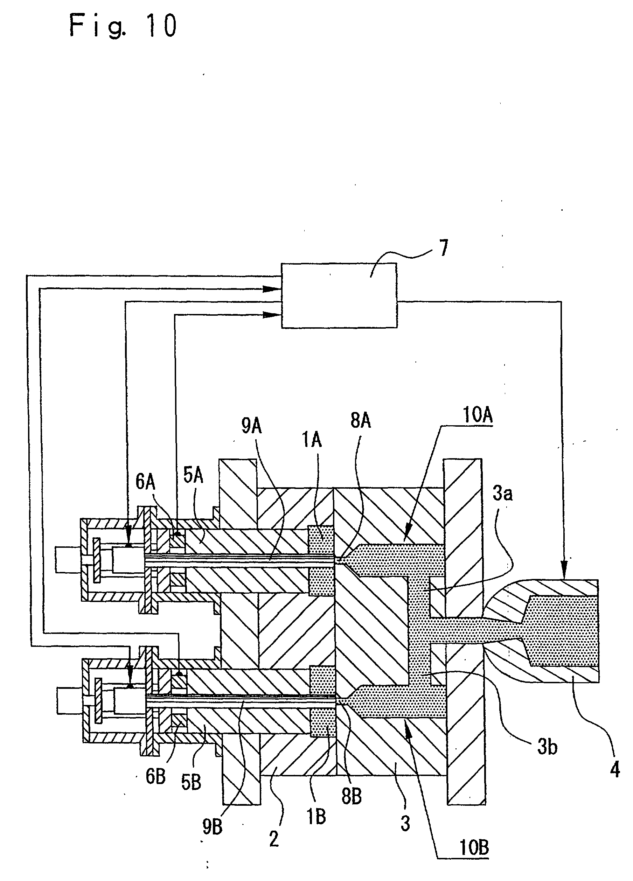

Next to this, when the pressure of the cavity 1B reaches a specified one, the controlling unit 7 transmits a signal to a driving unit (the servo valve 9b of the punch cylinder in FIG. 7) of the punch 9B for the cavity 1B like in the above. The driving unit shifts the punch 9B to the side of the gate 8B as shown in FIG 10 for completely closing the gate 8B. Along with this, the movable core 5B is made advanced into the cavity 1B to compress the molten resin in the cavity to unify the pressure distribution in the cavity. At the same time, the resin in the cavity 1B is compressed until the pressure thereof reaches the other specified value.

In this case, each of the respective detected values for controlling the movable cores and punches, is scanned with a scanning time of 2msec or less, preferably of 1msec or less, and further preferably, of 500µsec or less.

Such operations, each being independently carried out for each of the cavities 1A and 1B, can provide the same shape of pressure behavior between the cavity 1A and cavity 1B after being completely filled with the resin like in the previous embodiment shown in FIGS. 1 to 3.

In the previous embodiments, the resin filled-state in each of the cavities is judged to be proper or improper by individually detecting the pressure in the cavity. However, the pressure in the cavity often behaviors with time by contamination in the mold or other areas to be sometimes not necessarily suitable as judging means for the resin-filled state of the cavity.

To provide the pressure sensor at the rear end of a sliding section is often found to be unsuitable because friction resistance of the sliding section is behaviord with time by the influence of wear or lubrication to behavior the detected value of the resin pressure in the cavity. To provide the pressure sensor directly in the cavity is also often unsuitable because an imprint of the pressure sensor is left on molded products, and a little difference in position of the sensor provided in each cavity sometimes causes difference between pressure detection values.

For solving such problems, still another embodiment of the apparatus according to the present invention shown in FIGS. 12A to 12D and FIGS. 14A to 14E is constituted so as to judge the resin-filled state in a cavity by a position of the movable core in the cavity.

In FIGS. 12A to 12D and FIG 14A to 14E, the embodiment of the apparatus is shown with examples of operations of filling one cavity with resin illustrated in successive steps. However, the same operations are individually carried out independently about a plurality of cavities like in the previous embodiments. Furthermore, for opening and closing the gate, instead of the valve gate type hot runner shown in each figure, the punch as shown in FIG. 8 to FIG 10 can be used.

An example of the operation for filling the cavity with resin as shown in FIGS. 12A to 12D will be first explained.

In the figure, reference numeral and character 1A denotes the cavity provided in the movable mold 2, which is also provided with the movable core 5A. Reference numeral 3 denotes the stationary mold in which there is provided the valve gate type hot runner 10A with the needle valve 13A therein. Reference character PL denotes the parting line.

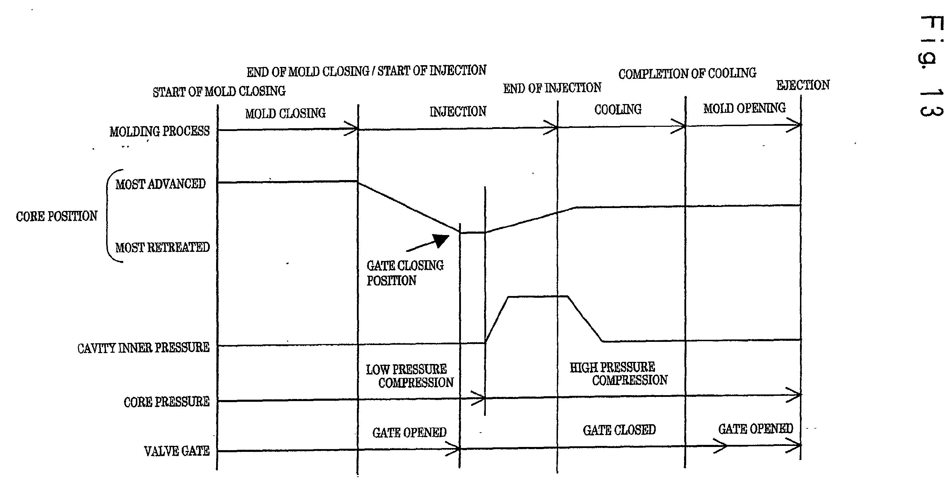

FIGURE 13 is an example of a timing chart showing relationships between time and the states of the molding process, core position, cavity inner pressure, core pressure, and valve gate in carrying out the injection compression molding according to this example.

Supply of the filling resin from the valve gate type hot runner 10A into the cavity 1A is started with the movable core 5A being advanced onto the parting line PL side with a specified pressure P1 applied thereto beforehand at a pre-stage of injection as shown in FIG. 12A.

As each of the cavities 1A is gradually filled with the resin with the inner pressure thereof raised up to the P1 or above, the movable cores 5A gradually retreat as shown in FIG. 12B due to the pressure forces.

When a top end 5A-1 of the retreating movable core 5A reaches the specified position C determined beforehand (that is, when the cavity is filled with a specified volume of resin necessary for producing a molded product) as shown in FIG. 12C, this is detected to actuate the needle valve 13A of the valve gate type hot runner 10A for closing the runner gate. For detecting that the top end 5A-1 of the movable core 5A reaches the specified position C in the cavity, the rear end of the movable core 5A is detected by a sensor 6C at a specified position C' outside the cavity, or a specified position of the movable core 5A is detected at a specified position in the driving unit of the core 5A, for example. From the result of the detection, the position of the top end of the core can be obtained. To such a position detection sensor, any known position detection means such as an encoder or a limit switch can be applied.

In this case, the resolution of the position detection sensor is taken to be 5µm or less, preferably, 1µm or less, and further preferably, 0.5µm or less. In addition, the sampling time of the detected value of the position sensor is taken to be 1msec or less, preferably, 50µsec or less, and further preferably, 25µsec or less.

In this case, each of the respective detected values for controlling the movable cores and valve gate type hot runners, is scanned with a scanning time of 2msec or less, preferably of 1msec or less, and further preferably, of 500µsec or less.

After the gate is closed, the pressure P2 is applied to the movable core 5A as shown in FIG. 12D to raise the resin pressure in the cavity for carrying out compression molding, and then, the resin in the cavity is cooled to be hardened with the resin pressure in the cavity being kept raised.

The above operation is independently carried out for each of the cavities. When the resin in all of the cavities is hardened, the mold is opened and the molded products are ejected.

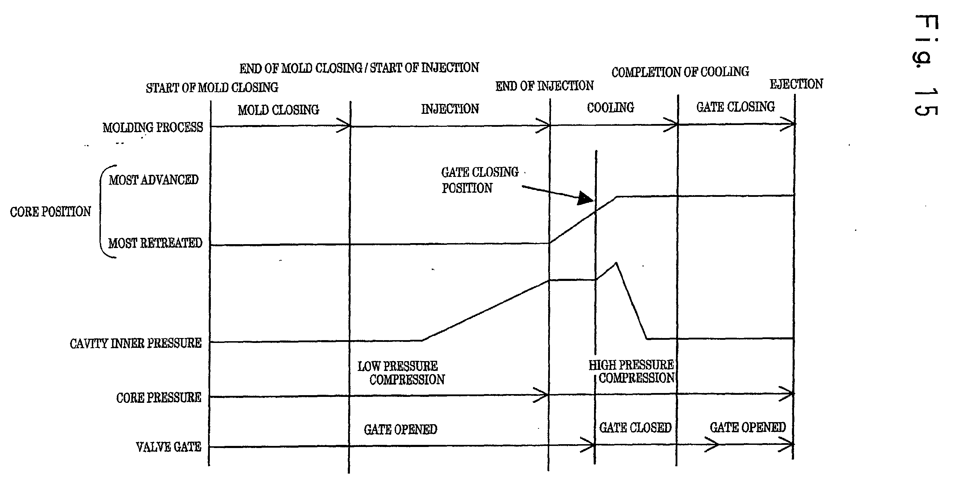

Next, another example of the operation for filling the cavity with resin in the apparatus according to the above embodiment will be explained with reference to FIGS. 14A to 14E together with FIG. 15 showing an example of a timing chart therefor. In FIG. 15, there are shown relationships between time and the states of the molding process, core position, cavity inner pressure, core pressure, and valve gate in carrying out the injection compression molding according to this example.

As shown in FIG. 14A, the movable core 5A is made retreated to the position D farther than the position C to which the movable core is retreated when the cavity 1A is filled with a specified volume of resin. This allows the resin to fill the cavity with a volume more than the specified one necessary for producing a molded product as shown in FIG 14B.

Following this, as shown in FIG. 14C, a pressure P3, higher than the injection pressure given from the hot runner, is applied to the movable core 5A with the gate being opened to push the movable core 5A back into the cavity. This allows a part of the resin filling the cavity to flow back onto the hot runner side through the gate to make it possible to provide a uniform pressure distribution in the cavity.

The cavity filled with excessive resin will generate too much pressure, so that the cavity may be filled beforehand with a sparing amount of the excessive resin which is also made to flow back by the movable core 5A pushed back into the cavity.

In the process of thus pushing the movable core 5A back into the cavity, it is detected that the volume of the resin in the cavity reaches the specified one, that is, that the top end of the movable core comes at the position C as shown in FIG. 14D. This then actuates the needle valve 13A to close the gate of the hot runner.

In the above, instead of detecting the core position, the pressure in the cavity may be detected for closing the gate.

Like in the previous example, after the gate is closed, the pressure P2 is applied to the movable core 5A as shown in FIG 14E to raise the resin pressure in the cavity for carrying out compression molding, and then, the resin in the cavity is cooled to be hardened with the resin pressure in the cavity being kept raised. The above operation is independently carried out for each of the cavities. When the resin in all of the cavities is hardened, the mold is opened and the molded products are ejected.

According to the present invention constituted as described above, the molded products can be produced accurately by the multi-cavity molding.

An evaluation of qualities of the molded products based on variation in weight of product by controlling method presents the following results with marks.
1) ×: Method without detection of the resin-filled state of the cavity (without individual control);
2) o:Method with detection of the resin-filled state of the cavity by the pressure in the cavity (with individual control based on pressure); and
3) oo: Method with detection of the resin-filled state of the cavity by the position of the movable core (with individual control based on position).

The variation in characteristics of the molded products such as density becomes smaller in order of the marks shown as ×, o, and oo, namely, × >> o > oo. Therefore, the method based on the detection of pressure in the cavity is preferable for controlling the resin-filled state. Further, the method of detecting the position of the movable core is more preferable for carrying out the control.

As explained above, in the present invention, the resin-filled state of each of the cavities is individually detected to individually close each gate for allowing compression injection molding to be independently carried out in each of the cavity. Consequently, the method for injection compression molding and the apparatus for working the method can be provided in which multi-cavity molding of high-precision molded products can be carried out speedily and efficiently with a relatively simple apparatus without any delay due to a controlling operation of a regulating valve of a runner section in resin injection operation.

It should be understood that the present invention is not limited by the above embodiments but includes all of modifications thereof that can be easily made on the basis of the above description by a person skilled in the art without departing from the spirit and scope of the invention.

## Claims

1. A method for injection compression molding which comprises carrying out the following process steps in the order indicated:
providing a mold comprising a movable mold (2) and a stationary mold (3), and being provided with a plurality of cavities (1A, 1B) each being provided with a movable core (5A, 5B) and a hot runner (10A, 10B) through which a distributed flow of molten resin is supplied to the cavities;
closing the mold (2, 3);
then supplying the molten resin to fill a plurality of the cavities (1A, 1B) provided in the mold while making the molten resin distributed to flow through the hot runners (10A, 10B) provided for respective cavities;
individually detecting a resin-filled state in each cavity;
when the resin-filled state in the cavity is detected to become in a specified state, individually closing a gate of the cavity completely;
individually advancing a top end of the movable core (5A, 5B) into the cavity to individually raise a pressure in the cavity up to a specified value; and
ejecting molded products after a specified cooling time.

2. A method for injection compression molding as claimed in claim 1 wherein supplying of the resin is started to fill the cavity therewith with a specified pressure (P1) applied to each of the movable cores (5A, 5B) beforehand to advance the movable cores to a parting line (PL) side and, when each of the movable cores (5A, 5B), being gradually retreated against the above pressure (P1) as the cavity is being filled with the resin, comes at a specified position (C), the gate is completely closed.

3. A method for injection compression molding as claimed in claim 1 wherein a volume of resin more than a specified volume is supplied to fill the cavity, the movable core (5A, 5B) is thereafter pressed into the cavity to allow a part of the resin to flow back through the gate, and the gate is completely closed when the movable core (5A, 5B) comes at the specified position (C) in the process.

4. A method for injection compression molding as claimed in claim 1 wherein the resin-filled state in each cavity is detected by individually detecting a pressure in each cavity.

5. A method for injection compression molding as claimed in claim 1 wherein the resin-filled state in each cavity is detected by individually detecting a position of the movable cores (5A, 5B) in each cavity.

6. A method for injection compression molding as claimed in any of claims 1 to 5 wherein the hot runner (10A, 10B) is of a valve gate type, by a valve of which the gate is opened and closed.

7. A method for injection compression molding as claimed in any of claims 1 to 5 wherein the gate is opened and closed by a punch (9A, 9B) advancing and retreating in the cavity toward and from the gate.

8. An apparatus for injection compression molding comprising:
a mold comprising a movable mold (2) and a stationary mold (3), the movable mold and the stationary mold being constituted so as to form a plurality of cavities (1A, 1B) when the mold is closed;
a plurality of flow distributing passages distributing molten resin injected from an injection nozzle (4);
a plurality of hot runners (10A, 10B) each provided in the stationary mold (3) for each of the cavities (1A, 1B) with each of the flow distributing passages connected thereto so that the distributed molten resin is simultaneously supplied to fill a plurality of the cavities (1A, 1B);
a plurality of movable cores (5A, 5B) each provided for each of the cavities in the movable mold so as to raise pressure of the molten resin filled in the cavity with a top of the movable core made to advance into the cavity;
a plurality of sensors (6A, 6B, 6C) each individually detecting a resin-filled state in each of the cavities; and
a controlling unit (7) controlling operations of opening and closing the mold, supplying the molten resin from the injection nozzle, opening and closing a plurality of the gates, and advancing and retreating the movable cores,
the controlling unit (7) carrying out in order controls of closing the mold (2, 3), individually detecting the resin-filled state in each of the cavities (1A, 1B) by each of the sensors (6A, 6B, 6C) with the molten resin being supplied from each of the hot runners (10A, 10B) to fill each of the cavities, individually closing the gate of a cavity in which the resin-filled state in the cavity becomes in a specified state, individually advancing thereafter each of the movable cores (5A, 5B) into the cavity in the specified resin-filled state to individually raise a pressure in each cavity up to a specified value, and ejecting molded products after a specified cooling time.

9. An apparatus for injection compression molding as claimed in claim 8 wherein the sensor detecting the resin-filled state in each of the cavities is a pressure sensor (6A, 6B) detecting a pressure in each of the cavities.

10. An apparatus for injection compression molding as claimed in claim 8 wherein the sensor detecting the resin-filled state in each of the cavities is a position sensor (6A, 6B) detecting a position of the movable core (5A, 5B) in each of the cavities.

11. An apparatus for injection compression molding as claimed in any of claims 8 to 10 wherein the hot runner (10A, 10B) is of a valve gate type.

12. An apparatus for injection compression molding as claimed in claim 11 wherein a gate opening and closing section in the valve gate type hot runner is positioned apart from the cavity so as to provide a constitution in which molten resin with a volume equal to or more than one shot is reserved between the gate opening and closing section and the cavity.

13. An apparatus for injection compression molding as claimed in any of claims 8 to 10 wherein the gate is provided with a punch (9A, 9B) advancing and retreating in the cavity toward and from the gate for being opened and closed.
